# EUROPÄISCHE PATENTANMELDUNG

(11) **EP 2 930 544 A1**
(43) Veröffentlichungstag der Anmeldung: **14.10.2015**
(21) Anmeldenummer: 15161077.1
(22) Anmeldetag: 26.03.2015
(51) Int. Cl.: G02B 1/02, G01N 21/552

(54) **Umlenkprisma und Messanordnung**

(30) Priorität: 09.04.2014 AT 502662014
(71) Anmelder: Anton Paar GmbH, 1030 Wien (AT)
(72) Erfinder: Cagran, Claus, 8045 Graz (AT); Imre, Michael, 8042 Graz (AT); Heppner, Ulrich, 8010 Graz (AT)
(74) Vertreter: Wildhack & Jellinek

(57) **Zusammenfassung**

Die Erfindung betrifft ein Umlenkprisma für elektromagnetische Strahlung, insbesondere für Refraktometer- und/oder ATR-Messungen, und eine Messanordnung, wobei der Körper (2) des Prismas (1) einstückig aus einem Einkristall gefertigt ist und zumindest zwei seitlich am Körper (2) einander gegenüberliegende oder um den Körper (2) umlaufende Strahlleitflächen (3) und eine zwischen den Strahlleitflächen (3) liegende oder von dieser umgebenen Messfläche (4) und zumindest eine Strahleintritts- bzw. - strahlaustrittsfläche (5) aufweist.

Erfindungsgemäß ist vorgesehen, dass die Messfläche (4) auf einer am Körper (2) ausgeformten Erhebung (6) liegt, die über einen die Erhebung (6) umgebenden Absatz (7) in den Restteil (8) des Körpers (2) übergeht, auf welchem Restteil (8) die Strahlleitfläche(n) (3) und/oder die Strahleintritts- bzw. -austrittsfläche(n) (5) liegen.

## Beschreibung

Die Erfindung betrifft ein Umlenkprisma für elektromagnetische Strahlung gemäß dem Oberbegriff des Patentanspruches 1. Derartige Prismen werden insbesondere für die Untersuchung von Fluiden eingesetzt, insbesondere in ATR-Messgeräten bzw. Refraktometern.

Von besonderer Bedeutung ist es dabei, dass dieses Umlenkprisma als optisches Element eines Messgerätes oder einer Messanordnung hermetisch dicht in das Gehäuse des Messgerätes oder in die Gehäusewand einer das zu untersuchende Medium führenden Rohrleitung eingesetzt wird.

Derartige Umlenkprismen und Messgeräte werden bei unterschiedlichen Prozessanwendungen in der Lebensmittelindustrie, in der chemischen Industrie, in der Papierindustrie usw. benötigt und dienen zur Identifikation bzw. Messwerterhebung von bzw. bei Prozessfluiden, insbesondere Prozessflüssigkeiten. Beispiele hierfür sind Absorptionsmessungen mit ATR-Kristallen und beispielsweise CO₂-Sensoren, wobei aus der Absorption von charakteristischen Wellenlängen im Infrarotbereich auf die Dichte der Fluide bzw. deren vorhandene Menge geschlossen werden kann. Auch die Messung des Grenzwinkels der Totalreflexion in Refraktometern erfolgt mit derartigen Umlenkprismen.

In beiden Fällen wird elektromagnetische Strahlung aus einer Quelle in das Umlenkprisma geführt und an einer Grenzfläche bzw. Messfläche zum zu untersuchenden Medium in Abhängigkeit vom Einstrahlwinkel und Brechungsindexunterschied zwischen dem Umlenkprisma und dem zu untersuchenden Fluid total reflektiert. Die Intensität des reflektierten Lichts wird mit einem für die jeweilige Aufgabenstellung ausgebildeten Detektor gemessen. In Abhängigkeit von den Parametern des zu untersuchenden Fluids erfolgt eine Änderung des Winkels der Totalreflexion bzw. der Intensität des total reflektierten Lichtes, welcher Messwert zur Bestimmung der Parameter der untersuchten Fluide herangezogen wird.

Schwierigkeiten ergeben sich beim Einbau von Umlenkprismen in Gehäusewände oder Rohrleitungen dadurch, dass zur gasdichten Verbindung des Umlenkprismas mit der Gehäusewand bzw. Rohrwand eine Lötung vorgenommen werden muss. Die Wände bestehen bei Prozessanwendungen in der Regel aus Edelstahl oder Titan und allenfalls auch aus keramischen Werkstoffen, die ausreichende Härte und chemische Beständigkeit gegen die zu untersuchenden Medien besitzen. Des weiteren sind auch Sanitärvorschriften zu beachten, insbesondere dass die Medien nicht durch undichte Lötstellen aus der Probenleitung austreten dürfen bzw. dass keinerlei Spalte oder Unebenheiten vorhanden sind, in denen sich Bakterien sammeln könnten.

Der Einsatz von elastischen Dichtungen oder von starren Dichtungen, z.B. aus Teflon, hat sich insbesondere aufgrund des Wartungsaufwandes, der Materialalterung und aus Reinigungsgründen als nicht zweckmäßig erwiesen. Bevorzugt sollen in der Praxis daher die Verbindungen zwischen derartigen Umlenkprismen und der Rohr- bzw. Gehäusewand durch Löten vorgenommen werden. Beispielsweise können Saphirkristalle mittels Gold- oder Platinlot in eine Wand eingelötet werden. Derartige Lötungen sind jedoch insbesondere für Einkristalle schwierig durchzuführen, insbesondere wenn die Messfläche mit der Außenwandfläche des Messgerätes bzw. mit der Innenwandfläche einer Rohrleitung flächig eben verbunden sein soll, um beispielsweise Hygienenormen für Anwendungen im Lebensmittelbereich zu erfüllen. Darüber hinaus soll die Lötung über die Lebensdauer des Messgerätes hermetisch gasdicht abschließen. Hier sind insbesondere die unterschiedlichen Ausdehnungskoeffizienten von Edelstahl und Kristallen und Lotmaterial zu berücksichtigen. Insbesondere kommt es immer wieder zu Undichtigkeiten aufgrund von Absplitterungen des Kristalls, welcher oft den auftretenden Drücken und Spannungen nicht standhält. Insbesondere beim Löten ist des weiteren darauf zu achten, dass die Löttemperatur so gering wie möglich gehalten wird, weshalb als Lotmaterialien zumeist Eutektika der eingesetzten Lötmaterialien verwendet werden.

Es wurde gefunden, dass die Außenform der Umlenkprismen im Bereich der Lötstelle eine wichtige Rolle spielt, um dem eingesetzten Einkristall den notwendigen Widerstand gegen die beim Löten und im Betrieb auftretenden Temperaturen und Beanspruchungen ausreichende Standfestigkeit zu vermitteln.

Erfindungsgemäß ist ein Umlenkprisma der eingangs genannten Art durch die im Kennzeichen des Anspruches 1 angeführten Merkmale charakterisiert. Es ist vorgesehen, dass die Messfläche auf einer am Körper ausgeformten Erhebung liegt, die über einen die Erhebung umgebenden Absatz in den Restteil des Körpers übergeht, auf welchem Restteil die Strahlleitfläche(n) und/oder die Strahleintritts- bzw. -austrittsfläche(n) liegen.

Es wird somit die Lötung auf einen Bereich des Körpers des Prismas verlegt, der speziell ausgebildet ist. Die am Körper des Prismas ausgebildete Erhebung dient zur Aufnahme der Lötstelle, wobei wiederum die Lötstelle den Umfang der Erhebung nicht vollständig, sondern nur partiell umgibt, und zwar in dem der Messfläche zugewandten bzw. dem an diese angrenzenden Bereich. Es zeigte sich, dass damit das Einlöten von Einkristall-Prismen in Gehäusewände oder Rohrleitungen, insbesondere bei der Verwendung von eutektischen Lotmaterialien, ohne Beschädigung des Einkristalls vorgenommen werden kann. Des weiteren zeigten Messgeräte mit derartig eingelöteten Kristallen eine ausgesprochen lange Lebensdauer, ohne Undichtwerden oder Schäden an der Lötstelle oder am Kristall.

Für die Herstellung des Umlenkprismas und auch für den Einsatz in Messgeräten ist es von Vorteil, wenn die Messfläche und die Strahleneintritts- bzw. -austrittsfläche von zueinander parallel ausgerichteten planebenen Flächen gebildet sind und/oder wenn die Endfläche der Erhebung die Messfläche darstellt.

Für die Standfestigkeit und Herstellung des Umlenkprismas ist es von Vorteil, wenn der Körper und/oder die Erhebung bezüglich einer Achse senkrecht zur Messfläche zentrisch symmetrisch ausgebildet sind und/oder wenn die Messfläche und/oder der Körper und/oder die Erhebung zumindest zwei senkrecht zur Messfläche verlaufende Symmetrieebenen besitzen und/oder wenn die Erhebung zylindrische, kegelstumpfförmige oder pyramidenstumpfförmige Gestalt oder die Gestalt eines geraden Quaders mit regelmäßiger polygonaler Grundfläche besitzt.

Um die mechanische Festigkeit des für das Prisma eingesetzten Einkristalles zu verbessern, kann vorgesehen sein, dass die Übergangskante des Absatzes von der Erhebung zum Restteil des Körpers bzw. zu einer am Restteil des Körpers ausgebildeten, die Erhebung umgebenden Aufstandsfläche gerundet und/oder abgefast ausgebildet ist.

Zweckmäßig ist es, wenn die Höhe der Erhebung gegenüber der Aufstandsfläche oder dem Restteil des Körpers und/oder die Breite der Aufstandsfläche so gewählt werden, dass die Übergangskante den Messstrahlengang nicht beeinflusst bzw. außerhalb des Messstrahlengangs liegt.

Das Höhen- und Breitenverhältnis wird somit derart gewählt, dass die für die jeweilige Messanwendung gewünschten Ein- und Austrittswinkel des Messstrahls an der Messfläche des Prismas in Kombination mit dem Winkel der umlaufenden Strahlleitfläche und den Ein- und Austrittsflächen realisiert werden können.
Für das Lötverhalten der eingesetzten Einkristalle zeigte es sich, dass es von Vorteil ist, wenn die Erhebung zumindest eine Umfangsfläche aufweist, die von der Messfläche nach außen hin geneigt abgeht und mit der Aufstandsfläche einen Winkel A von 45° ≤ A ≤ 90°, vorzugsweise 70° ≤ A ≤ 90°, einschließt, wobei sich der Winkel A zum Inneren der Erhebung öffnet.

Für die Herstellung und das Einsatzverhalten ist es zweckmäßig, wenn die Aufstandsfläche parallel zur Messfläche verläuft.

Eine spezielle Form eines Umlenkprismas ist dadurch charakterisiert, dass der Restteil des Körpers zumindest teilweise von einem Rotationskörper, z.B. Kugel- oder Ellipsoidsegment oder -sektor, gebildet ist und die Strahlleitflächen von der Umfangsfläche oder Teilen der Umfangsfläche des Rotationskörpers gebildet sind.

Eine erfindungsgemäße Messanordnung mit einem Umlenkprisma, wobei das Umlenkprisma in eine mit dem zu untersuchenden Medium in Kontakt bringbare Wand des Messgerätes oder eine das zu untersuchende Medium führende Rohrleitung eingelötet ist und die Messfläche des Umlenkprismas mit dem Medium kontaktierbar ist, ist erfindungsgemäß dadurch gekennzeichnet, dass die Lötstelle vom Körper des Prismas lediglich die Erhebung umgibt und ausgehend vom Umfangsrand der Messfläche sich über maximal 70%, vorzugsweise maximal 60%, der Höhe der Erhebung erstreckt.

Durch die Begrenzung der Lötstelle auf den dem Medium nahen Rand der Erhebung wurde erreicht, dass eine Beschädigung des Einkristalls beim Löten weitgehend vermieden und auch im Betrieb die Standzeit des Einkristalls beträchtlich erhöht wird.

Vorteilhaft ist auch, wenn der an die Lötstelle anschließende Innenwandabschnitt der Wand gegenüber der Umfangsfläche der Erhebung einen Abstand besitzt, der die Dicke der Lötstelle zwischen der Erhebung und dem Innenwandabschnitt übersteigt. Es wird dabei vermieden, dass bei Wärmedehnungen die Gehäusewand und das Umlenkprisma in Kontakt kommen, womit Beschädigungen vermieden werden.

Eine Verbesserung für den Lötvorgang und die Dichtigkeit ergibt sich, wenn der Abstand zwischen zumindest einem Teilbereich des die Lötstelle bildenden Innenwandabschnitts der Wand gegenüber der zumindest einen Umfangsfläche der Erhebung einen Abstand besitzt, der sich zur Messfläche hin zumindest abschnittweise kontinuierlich zunimmt.

Zur Verbesserung der Lötbarkeit und verbesserten Aufbringen des Lötmaterials kann vorgesehen sein, dass im Bereich der Lötstelle auf der Umfangsfläche der Erhebung eine Schicht aus Titan oder Gold oder Legierungen dieser Metalle aufgebracht ist, die eine Stärke von kleiner als 100 µm bevorzugt kleiner als 20 µm besitzt, auf die die Lötschicht aufgebracht ist.

Um Beschädigungen des Einkristalls aufgrund von Wärmedehnungen bzw. Wärmespannungen im Gehäuse bzw. in der Gehäusewand zu vermeiden, kann vorgesehen sein, dass das Umlenkprisma und ein(e) die Wand mit einer Ausnehmung für das Umlenkprisma bzw. dem Innenwandabschnitt aufweisendes Gehäuse des Messgerätes oder Rohrleitung ausschließlich über die Lötstelle in Verbindung stehen.

Um das Einlöten zu erleichtern, kann vorgesehen sein, dass die Dicke der Lötstelle bzw. der Abstand zwischen der Umfangsfläche der Erhebung und dem Innenwandabschnitt von der Messfläche zur Aufstandsfläche hin zunimmt.

Im Folgenden wird die Erfindung anhand der Zeichnung näher erläutert.

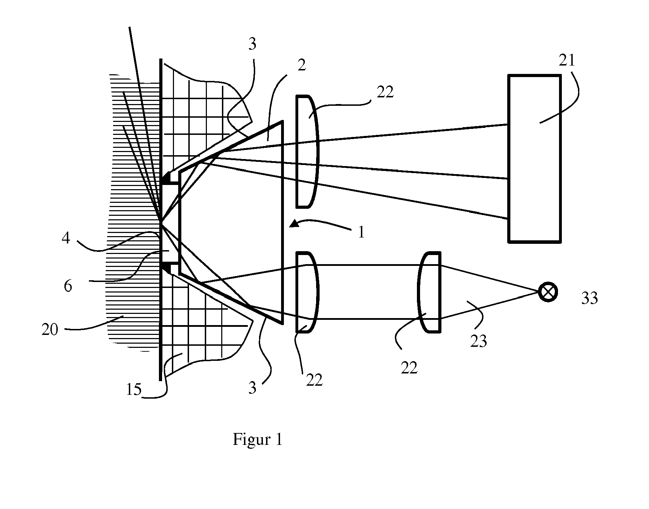

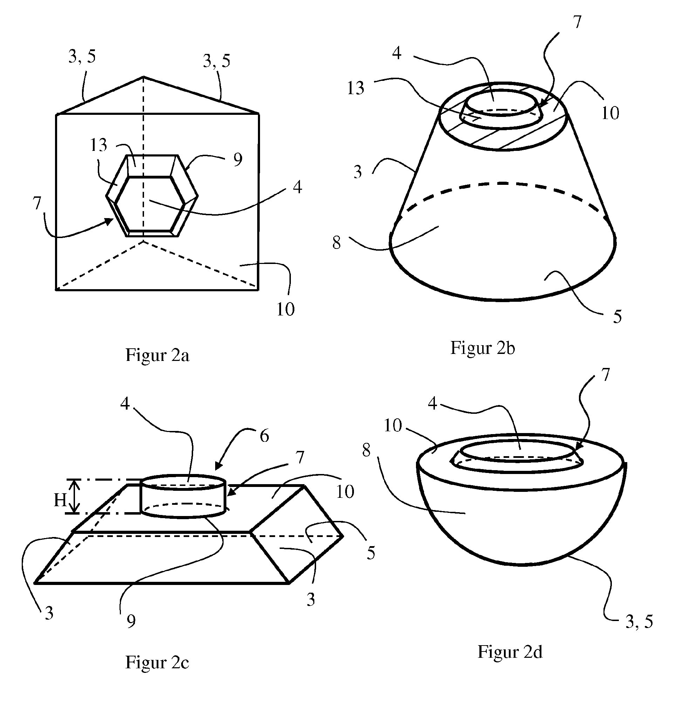

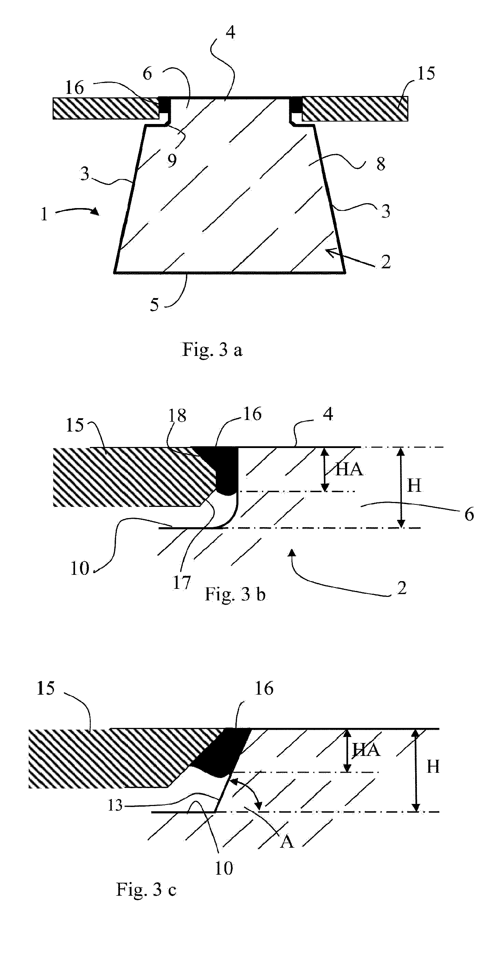

Fig. 1 zeigt schematisch ein erfindungsgemäßes Messgerät. Fig. 2a, 2b, 2c und 2d zeigen unterschiedliche Ausformungen eines Umlenkkristalls. Fig. 3a, 3b und 3c zeigen unterschiedliche Möglichkeiten für das Einlöten von Umlenkprismen in die Wand eines Gehäuses von Messgeräten.

Fig. 1 zeigt den prinzipiellen Aufbau eines erfindungsgemäßen Messgerätes, in diesem Fall eines Abbe-Refraktometers zur Messung des Grenzwinkels der Totalreflexion. Ein Umlenkprisma 1 ist mit seiner Grenzfläche bzw. seiner Messfläche 4 gegen das zu untersuchende Medium 20, das sich z.B. in einer Prozessleitung befindet, in einer Ausnehmung 30 in dieser Wand 15 der Prozessleitung dichtend eingesetzt. Für die Messung wird elektromagnetische Strahlung 23 vorgegebener Wellenlänge von einer Strahlungsquelle 33 in das Umlenkprisma 1, gegebenenfalls über Kollimatoren 22, eingestrahlt. Zusätzlich können auch Filter in den Strahlengang eingebaut werden, um gezielt Wellenlängenbereiche und/oder Polarisationsrichtungen zu selektieren oder auszublenden. Die von der Strahlenquelle 33 ausgehende Strahlung 23 wird an die Seiten- bzw. Strahlflächen 3 bzw. die seitlichen Mediengrenzflächen des Umlenkprismas 1 gestrahlt. Der Winkel der auftreffenden Strahlung 23, welche diese mit den Strahlleitflächen 3 einschließt, wird dabei so gewählt, dass an diesen Strahlleitflächen 3 eine Totalreflexion der einfallenden Strahlung stattfindet. Von den Strahlleitflächen 3 wird die Strahlung 23 in das optische Fenster bzw. auf die Messfläche 4 reflektiert, welche Messfläche 4 mit dem zu untersuchenden Medium 20 in Kontakt steht. Die auf die Messfläche 4 auftreffende Strahlung 23 wird je nach Einfallswinkel und Brechungsindexdifferenz zwischen Medium 20 und Prismenmaterial an der Grenzfläche bzw. Messfläche 4 total reflektiert und/oder ins Medium 20 gestreut. Der im Umlenkprisma 1 verbleibende Anteil der Strahlung 23 wird über eine weitere Strahlleitfläche 3 total reflektiert und gelangt über weitere Kollimatoren 22 und allenfalls Filter zu einem Empfänger bzw. Detektor 21, der die einlangende Intensität der an der Messfläche 4 reflektierten Strahlung 23 misst. Die erhaltenen Messwerte werden in Hinblick auf Konzentrationen von Medienbestandteilen und/oder auf die Bestandteile bzw. Komponenten des Mediums 20 untersucht.

Voraussetzung für diese Messungen ist, dass die Umlenkprismen für derartige Messungen einen höheren Brechungsindex besitzen als das zu untersuchende Medium.

Bei den eingesetzten Materialien für die Umlenkprismen handelt es sich im Regelfall um Saphir, YAG und Spinell. Auch andere Materialien sind einsetzbar. Es handelt sich durchwegs um einkristalline oder gleichwertig aufgebaute Körper, die zu einem Prisma geformt bzw. abgearbeitet sind. Es wird betont, dass unter Prisma jeder Körper zu verstehen ist, der eine einfallende elektromagnetische Strahlung zumindest an der Messfläche total reflektieren kann, sodass die an der Messfläche reflektierte Strahlung gegebenenfalls über zumindest eine weitere Strahlleitfläche über zumindest eine weitere Totalreflexion zu einem Empfänger geleitet werden kann. Der Begriff "Prisma" steht hiermit nicht für den geometrischen Körper, sondern für jeden Körper, der eine entsprechende Strahlumlenkung ermöglicht, so wie sie in einem Prisma vorliegt.

Vorteilhafterweise hat der für derartige Messungen eingesetzte Kristall eine für die Messung passende Form mit sich zur Messfläche 4 hin verjüngenden bzw. einander annähernden Seiten- bzw. Strahlleitflächen 3, die den Messstrahl 23 zur Messfläche 4 leiten. Beispiele für Umlenkprismen, so wie sie bei Messungen eingesetzt werden können, sind in Fig. 2a, Fig. 2b , Fig. 2c und Fig 2d dargestellt. Grundsätzlich können - wie auch dargestellt - die Umlenkprismen von prismatischen Körpern, pyramidenstumpfförmigen Körpern, kegelstumpfförmigen Körpern usw. gebildet sein, die entsprechende Symmetrien aufweisen können. Auch Rotationskörper wie Ellipsoide oder Halbkugeln mit abgeflachten, die Messfläche 4 bildenden ebenen Endflächen und beliebig geformte, die Strahleintritts- und -austrittsfläche 5 bildende Flächen sind einsetzbar. In diesem Fall sind die Strahlleitflächen 3 von der Innenwandfläche des Rotationskörpers gebildet. Die geneigten oder gekrümmten Flächen bzw. Strahlleitflächen 3 leiten die Strahlung 23 zum optischen Fenster bzw. zur Messfläche 4 und gewährleisten dort den passenden Einfallswinkel, um entweder eine Totalreflexion zu bewirken oder die Messstrahlung hinsichtlich des Grenzwinkels zur Totalreflexion untersuchen zu können und/oder den an der Messfläche 4 reflektierten Anteil der Messstrahlung 23 über die weitere bzw. gegenüberliegende Strahlleitfläche 3 dem Detektor 21 zuzuleiten. Gegebenenfalls kann die Umlenkung über eine Strahlleitfläche 3 auch entfallen und der Messstrahl wird unter einem vorgegebenen Winkel direkt an die Messfläche 4 gelenkt.

Aus diesen Figuren ist ersichtlich, dass die Umfangsflächen 13 der Erhebung 6 bzw. des Absatzes 7 gegen die Aufstandsfläche 10 senkrecht oder geneigt angeordnet sein können Die Messfläche 4 und die Aufstandsfläche 10 sind bevorzugt parallel ausgebildet, können aber, insbesondere wenn die Gehäusewand 15 das Prisma 1 nur an der Lötstelle berührt, auch geneigt zueinander ausgeführt werden.

Fig. 3a zeigt im Schnitt den Körper 2 eines Umlenkprismas 1, das kegelstumpfförmig ausgebildet ist und eine zylindrische Erhebung 6 trägt. Die zylindrische Erhebung 6 ist über eine Lötstelle 16 in eine Ausnehmung 30 der Wand 15 des Gehäuses eines Messgerätes oder einer Rohrleitung eingelötet.

Fig. 3b zeigt eine Wand 15, die im Lötbereich an ihrer dem Medium und dem Umlenkprisma 1 zugewandten Eckbereich abgefast ist. Damit wird eine gleichmäßigere Benetzung des Lötbereichs mit dem Lot sichergestellt, dies ist vor allem in Hinblick auf die Ausbildung einer gasdichten Lötstelle von besonderem Vorteil.

Fig. 3c zeigt eine Wand 15, die sich in Richtung zum Körper 2 von diesem entfernt, sodass sich die Lötstelle 6 in Richtung zum Körper 2 hin verbreitert.

Gleichzeitig ist hier die Erhebung 6 durch eine Umfangsfläche 13 begrenzt, die von der Messfläche 4 nach außen hin geneigt abgeht und mit der Ebene der Aufstandsfläche 10 einen Winkel A von 45° ≤ A ≤ 90°, vorzugsweise 70° ≤ A ≤ 90°, einschließt, wobei sich der Winkel A zum Inneren der Erhebung 6 öffnet.

In jedem Fall erstreckt sich die Höhe HA der Lötstelle 16 in eine Richtung senkrecht zur Messfläche 4 nicht über die gesamte Höhe H der Erhebung 6 bezüglich der Aufstandsfläche 10, sondern endet in einem Abstand HA von der Endfläche der Erhebung 6 bzw. von der Messfläche 4. Dieser Abstand HA beträgt maximal 80 % der Höhe H der Erhebung 6.

## Patentansprüche

1. Umlenkprisma für elektromagnetische Strahlung, insbesondere für Refraktometer- und/oder ATR-Messungen, wobei der Körper (2) des Prismas (1) einstückig aus einem Einkristall gefertigt ist und zumindest zwei seitlich am Körper (2) einander gegenüberliegende oder um den Körper (2) umlaufende Strahlleitflächen (3) und eine zwischen den Strahlleitflächen (3) liegende oder von dieser umgebenen Messfläche (4) und zumindest eine Strahleintritts- bzw. -strahlaustrittsfläche (5) aufweist, **dadurch gekennzeichnet,**
**dass** die Messfläche (4) auf einer am Körper (2) ausgeformten Erhebung (6) liegt, die über einen die Erhebung (6) umgebenden Absatz (7) in den Restteil (8) des Körpers (2) übergeht, auf welchem Restteil (8) die Strahlleitfläche(n) (3) und/oder die Strahleintritts-bzw. -austrittsfläche(n) (5) liegen.

2. Umlenkprisma nach Anspruch 1, **dadurch gekennzeichnet, dass** die Messfläche (4) und die Strahleneintritts- bzw. -austrittsfläche (5) von zueinander parallel ausgerichteten planebenen Flächen gebildet sind und/oder dass die Endfläche der Erhebung (6) die Messfläche (4) darstellt.

3. Umlenkprisma nach Anspruch 1 oder 2, **dadurch gekennzeichnet, dass** der Körper (2) ein Einkristall aus Al₂O₃, Y₃Al₅O₁₂ oder MgAl₂O₄ ist.

4. Umlenkprisma nach einem der Ansprüche 1 bis 3, **dadurch gekennzeichnet, dass** der Körper (2) und/oder die Erhebung (6) bezüglich einer Achse senkrecht zur Messfläche (4) zentrisch symmetrisch ausgebildet sind und/oder dass die Messfläche (4) und/oder der Körper (2) und/oder die Erhebung (6) zumindest zwei senkrecht zur Messfläche (4) verlaufende Symmetrieebenen besitzen.

5. Umlenkprisma nach einem der Ansprüche 1 bis 4, **dadurch gekennzeichnet, dass** die Erhebung (6) zylindrische, kegelstumpfförmige oder pyramidenstumpfförmige Gestalt oder die Gestalt eines geraden Quaders mit regelmäßiger polygonaler Grundfläche besitzt.

6. Umlenkprisma nach einem der Ansprüche 1 bis 5, **dadurch gekennzeichnet, dass** die Übergangskante (9) des Absatzes (7) von der Erhebung (6) zum Restteil (8) des Körpers (2) bzw. zu einer am Restteil (8) des Körpers (2) ausgebildeten, die Erhebung (6) umgebenden Aufstandsfläche (10) gerundet und/oder abgefast ausgebildet ist.

7. Umlenkprisma nach einem der Ansprüche 1 bis 6, **dadurch gekennzeichnet, dass** die Erhebung (6) zumindest eine Umfangsfläche (13) aufweist, die von der Messfläche (4) nach außen hin geneigt abgeht und mit der Aufstandsfläche (10) einen Winkel A von 45° ≤ A ≤ 90°, vorzugsweise 70° ≤ A ≤ 90°, einschließt, wobei sich der Winkel A zum Inneren der Erhebung (6) öffnet.

8. Umlenkprisma nach einem der Ansprüche 1 bis 7, **dadurch gekennzeichnet, dass** die Aufstandsfläche (10) parallel zur Messfläche (4) verläuft.

9. Umlenkprisma nach einem der Ansprüche 1 bis 8, **dadurch gekennzeichnet, dass** der Restteil (8) des Körpers (2) zumindest teilweise von einem Rotationskörper, z.B. Kugel- oder Ellipsoidsegment oder -sektor, gebildet ist und die Strahlleitflächen (3) von der Umfangsfläche oder Teilen der Umfangsfläche des Rotationskörpers gebildet sind.

10. Messanordnung mit einem Umlenkprisma (1) nach einem der Ansprüche 1 bis 9, wobei das Umlenkprisma (1) eine Ausnehmung (30) in einer dem zu untersuchenden Medium zugewandten bzw. in Kontakt bringbaren Wand (15) eines Messgerätes oder der Wand (15) einer Rohrleitung eingelötet ist und die Messfläche (4) dem Medium freigestellt zugewandt bzw. mit diesem kontaktierbar ist, **dadurch gekennzeichnet, dass** die Lötstelle (16) vom Körper (2) des Prismas (1) lediglich die Erhebung (6) umgibt und ausgehend vom Umfangsrand der Messfläche (4) sich über maximal 80%, vorzugsweise maximal 60%, der Höhe (H) der Erhebung (6) erstreckt.

11. Messanordnung nach Anspruch 10, **dadurch gekennzeichnet, dass** der an die Lötstelle (16) anschließende Innenwandabschnitt (17) der Wand (15) gegenüber der Umfangsfläche (13) der Erhebung (6) einen Abstand besitzt, der die Dicke der Lötstelle (16) zwischen der Erhebung (6) und dem Innenwandabschnitt (17) übersteigt.

12. Messanordnung nach Anspruch 11, **dadurch gekennzeichnet, dass** der Abstand zwischen zumindest einem Teilbereich des die Lötstelle (16) bildenden Innenwandabschnitts (18) der Wand (15) gegenüber der zumindest einen Umfangsfläche (13) der Erhebung (6) einen Abstand besitzt, der sich zur Messfläche (4) hin zumindest abschnittweise kontinuierlich zunimmt.

13. Messanordnung nach einem der Ansprüche 10 bis 12, **dadurch gekennzeichnet, dass** im Bereich der Lötstelle (16) auf der Umfangsfläche (13) der Erhebung (6) eine Schicht aus Titan oder Gold oder Legierungen dieser Metalle aufgebracht ist, die eine Stärke von kleiner 100 µm, bevorzugt kleiner 20 µm besitzt, auf die die Lötschicht aufgebracht ist.

14. Messanordnung nach einem der Ansprüche 10 bis 13, **dadurch gekennzeichnet, dass** das Umlenkprisma (1) und ein(e) die Wand (15) mit einer Ausnehmung (30) für das Umlenkprisma (1) bzw. dem Innenwandabschnitt (17) aufweisendes Gehäuse des Messgerätes oder Rohrleitung ausschließlich über die Lötstelle (16) in Verbindung stehen.

15. Messanordnung nach einem der Ansprüche 10 bis 14, **dadurch gekennzeichnet, dass** die Dicke der Lötstelle (16) bzw. der Abstand zwischen der Umfangsfläche (13) der Erhebung (6) und dem Innenwandabschnitt (17) von der Messfläche (4) zur Aufstandsfläche (10) hin zunimmt.

16. Messanordnung nach einem der Ansprüche 10 bis 15, **dadurch gekennzeichnet, dass** die Höhe (H) der Erhebung (6) gegenüber der Aufstandsfläche (10) oder dem Restteil (8) des Körpers (2) und/oder die Breite der Aufstandsfläche (10) so gewählt werden, dass die Übergangskante (9) den Messstrahlengang nicht beeinflusst bzw. außerhalb des Messstrahlengangs liegt.
